(19) Europäisches Patentamt
European Patent Office
Office européen des brevets

(11) Veröffentlichungsnummer: 0 346 277
A1

# (12) EUROPÄISCHE PATENTANMELDUNG

(21) Anmeldenummer: 89810397.3

(22) Anmeldetag: 29.05.89

(51) Int. Cl.[4]: C 09 B 67/22
C 09 B 3/04

(30) Priorität: 06.06.88 CH 2135/88

(43) Veröffentlichungstag der Anmeldung:
13.12.89 Patentblatt 89/50

(84) Benannte Vertragsstaaten:
CH DE FR GB IT LI

(71) Anmelder: CIBA-GEIGY AG
Klybeckstrasse 141
CH-4002 Basel (CH)

(72) Erfinder: Adam, Jean-Marie, Dr.
Rue de Village Neuf 60 D
68300 Rosenau (FR)

## (54) Mischungen von Dicyanobenzanthronverbindungen.

(57) Farbstoffmischungen, enthaltend mindestens zwei verschiedene Dicyanobenzanthronverbindungen der Formel

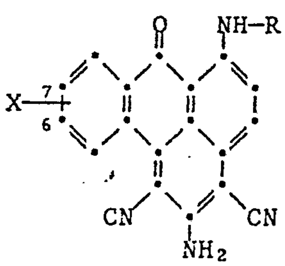

worin
R Wasserstoff, eine gegebenenfalls substituierte Alkyl- oder Arylgruppe und
X Wasserstoff oder Halogen, das sich in 6- oder 7-Stellung befindet, bedeutet.

EP 0 346 277 A1

**Beschreibung**

## Mischungen von Dicyanobenzanthronverbindungen

Die vorliegende Erfindung betrifft Mischungen von Dicyanobenzanthronverbindungen, Verfahren zu deren Herstellung sowie deren Verwendung als Farbstoffe zum Färben und Bedrucken von halbsynthetischem oder synthetischem hydrophobem Material.

Die erfindungsgemässen Farbstoffmischungen enthalten mindestens zwei verschiedene Dicyanobenzanthronverbindungen der Formel

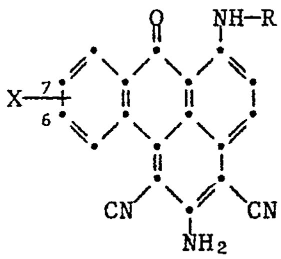

(1)

worin
R Wasserstoff, eine gegebenenfalls substituierte Alkyl- oder Arylgruppe und
X Wasserstoff oder Halogen, das sich in 6- oder 7-Stellung befindet, bedeutet.

Bedeutet R einen Alkylrest, so handelt es sich um einen gegebenenfalls substituierten unverzweigten oder verzweigten Alkylrest oder um einen Cycloalkylrest. Der Cycloalkylrest weist vorzugsweise 5 bis 8 C-Atome, der offenkettige Alkylrest vorzugsweise 1 bis 8 C-Atome auf.

Als unverzweigte oder verzweigte offenkettige Alkylreste kommen z.B. in Frage: Methyl, Ethyl, n- und iso-Propyl, n-, sec.- oder tert.Butyl, n-und iso-Pentyl, n- und iso-Hexyl oder 2-Ethylhexyl.

Diese Alkylreste können ein- oder mehrmals substituiert sein, beispielsweise durch $C_1$-$C_4$-Alkoxy, durch OH substituiertes $C_1$-$C_4$-Alkoxy, Phenyl, Phenoxy oder Phenylaminocarbonyl, wobei die Phenylgruppe in den drei letztgenannten Resten z.B. durch $C_1$-$C_4$-Alkyl, $C_1$-$C_4$-Alkoxy oder Phenoxy substituiert sein kann. Geeignete Reste dieser Art sind z.B.: Hydroxyethyl, 1-Hydroxy-isopropyl, Ethoxymethyl, 2-Hydroxyethoxypentyl, Benzyl, 1-Phenylethyl, 2-Phenylethyl, 1-Methyl-2-phenylethyl, 1-iso-Butyl-3-phenylpropyl, 1,5-Diphenylpentyl-3, 1-Methyl-2-phenoxyethyl oder 1-Methyl-2-phenylaminocarbonyl-ethyl.

Bedeutet R einen gegebenenfalls substituierten $C_5$-$C_8$-Cycloalkylrest, so handelt es sich vor allem um den Cyclopentyl- und Cyclohexylrest; als Substituenten kommen vor allem $C_1$-$C_4$-Alkylgruppen, insbesondere die $CH_3$-Gruppe, in Frage.

Bedeutet R einen Arylrest, so handelt es sich vor allem um einen Naphthylrest und insbesondere um einen Phenylrest, wobei diese Reste substituiert sein können, z.B. durch $C_1$-$C_4$-Alkyl, $C_1$-$C_4$-Alkoxy, Halogen, wie Fluor, Chlor oder Brom, Nitro, $C_1$-$C_4$-Alkylcarbonylamino oder $C_1$-$C_4$-Alkoxycarbonyl.

In bevorzugten Mischungen von Farbstoffen der Formel (1) bedeutet
R jeweils $C_1$-$C_6$-Alkyl, welches unsubstituiert ist oder durch Phenyl, Phenoxy oder Phenylaminocarbonyl substituiert ist, wobei die Phenylgruppe in den drei letztgenannten Resten durch $C_1$-$C_4$-Alkyl, $C_1$-$C_4$-Alkoxy oder Phenoxy substituiert sein kann, oder Phenyl, welches unsubstituiert ist oder durch $C_1$-$C_4$-Alkyl substituiert ist.

In den Mischungen von Farbstoffen der Formel (1) bedeutet X jeweils Halogen, wie Brom oder vor allem Chlor, welches sich in 6- oder 7-Stellung befindet, oder insbesondere Wasserstoff.

Wegen ihres guten färberischen Verhaltens, insbesondere wegen des guten Ausziehvermögens aus wässrigem Färbebad, sind Farbstoffmischungen, enthaltend 20-80 Gew.% eines Farbstoffes der Formel

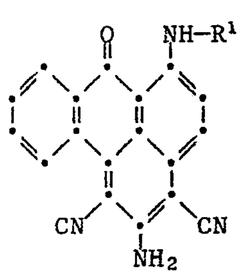

(2)

worin
$R^1$ $C_3$-$C_5$-Alkyl, Cyclohexyl oder Phenyl-$C_3$-$C_5$-Alkyl bedeutet, sowie 80-20 Gew.% eines Farbstoffes der Formel

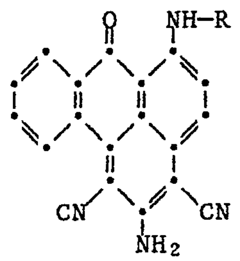

(3)

worin
R Wasserstoff, eine gegebenenfalls substituierte Alkyl- oder Arylgruppe bedeutet, besonders bevorzugt.
$R^1$ bedeutet vorzugsweise n-Butyl, sec-Butyl oder 1-Methyl-3-phenylpropyl.

Für R gelten auch in der Formel (3) die bereits unter der Formel (1) aufgeführten Bedeutungen und Bevorzugungen. Die besonders bevorzugte Bedeutung von R ist offenkettiges $C_1$-$C_6$-Alkyl, welches unsubstituiert oder durch Phenyl substituiert ist, oder Cyclohexyl.

Besonders bevorzugte Mischungen enthalten 40-60 Gew.% eines Farbstoffes der Formel (2), worin $R^1$ n-Butyl, sec-Butyl oder 1-Methyl-3-phenylpropyl bedeutet, sowie 60-40 Gew.% eines Farbstoffes der Formel (3), worin R offenkettiges $C_1$-$C_6$-Alkyl, welches unsubstituiert oder durch Phenyl substituiert ist, oder Cyclohexyl bedeutet.

Die Dicyanobenzanthronverbindungen der Formel (1), (2) und (3) sind aus der EP-A-238.443 bekannt. Man erhält sie z.B., indem man ein Aminoanthrachinon der Formel

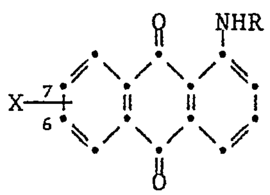

(4)

worin X und R die unter der Formel (1) angegebene Bedeutung aufweisen, in einem inerten Lösungsmittel in Gegenwart von Titantetrachlorid und einem tertiären Amin mit Malodinitril umsetzt.

Die erfindungsgemässen Farbstoffmischungen, enthaltend mindestens zwei Farbstoffe der Formel (1), erhält man vorzugsweise, indem man die Farbstoffe einzeln herstellt, z.B. wie in der EP-A-238.443 beschrieben, und anschliessend miteinander vermischt. Das Vermischen kann z.B. in organischem Lösungsmittel, in wässriger Dispersion oder in trockener Form durchgeführt werden. Vorzugsweise vermischt man die trockenen Farbstoffe zusammen mit Dispergiermittel und vermahlt anschliessend das Gemisch, gegebenenfalls unter Zugabe von Wasser, bis eine Dispersion mit der gewünschten Korngrösse entsteht.

Eine weitere Möglichkeit zur Herstellung der erfindungsgemässen Farbstoffmischungen besteht darin, dass man ein Gemisch aus mindestens zwei verschiedenen Aminoanthrachinonen der Formel (4) in einem inerten Lösungsmittel in Gegenwart von Titantetrachlorid und einem tertiären Amin mit Malodinitril umsetzt. Für die Umsetzung der Aminoanthrachinone der Formel (4) mit Malodinitril kommen als inerte Lösungsmittel z.B. aliphatische Kohlenwasserstoffe, wie n-Pentan, n-Hexan oder n-Heptan, chlorierte Kohlenwasserstoffe, wie Methylenchlorid, Chloroform oder Tetrachlormethan, Ether, wie z.B. Diethylether, oder aromatische Verbindungen, wie z.B. Nitrobenzol oder Halogenbenzole in Betracht. Vorzugsweise verwendet man einen chlorierten Kohlenwasserstoff, vor allem Methylenchlorid.

Als tert.Amin werden z.B. aliphatische Amine, wie Triethylamin oder vor allem aromatische Amine, wie z.B. Picolin oder Pyridin verwendet.

Pro Mol Anthrachinonverbindung der Formel (4) setzt man mindestens 2 Mol, vorzugsweise jedoch 2,2 bis 3 Mol Malodinitril ein. Ein grösserer Ueberschuss ist im allgemeinen nicht schädlich, jedoch unzweckmässig. Die Menge an Titantetrachlorid beträgt vorzugsweise 2 bis 10 Mol, insbesondere 3 bis 6 Mol pro Mol Anthrachinonverbindung der Formel (4).

Das tertiäre Amin wird mindestens in der Menge eingesetzt, die erforderlich ist, um die entstehende Säure zu binden. Im allgemeinen verwendet man jedoch einen Ueberschuss, vorzugsweise 2 bis 6 Mol pro Mol Titantetrachlorid.

Die Reaktionstemperatur liegt im allgemeinen etwa zwischen -10° und +60°C, vorzugsweise zwischen 0° und 25°C.

Die erfindungsgemässen Mischungen von Farbstoffen der Formel (1) können als Farbstoffe zum Färben und Bedrucken von halbsynthetischen und, insbesondere, synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose-2½-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-hexahydrobenzol; aus Polycarbonaten, z.B. solchen aus α,α-Dimethyl-4,4′-dihydroxy diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dis persion in Gegenwart von üblichen anionischen oder nichtionischen Dispergiermitteln und gegebenenfalls üblichen Quellmitteln (Carrier) bei Temperaturen zwischen 80 und 140°C. Cellulose-$2\frac{1}{2}$-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben des Polyesteranteils in Polyester/Wolle- und Polyester/Cellulosefaser-Mischungen vewendet werden können.

Gegenüber den bekannten Einzelfarbstoffen der Formel (1) zeichnen sich die erfindungsgemässen Farbstoffmischungen, enthaltend mindestens zwei dieser Farbstoffe, durch erheblich verbessertes Ausziehvermögen auf Polyestermaterial aus. Während die Einzelfarbstoffe für das wässrige Ausziehverfahren, vor allem zum Färben in tiefen Nuancen, nur bedingt geeignet sind, ergeben die erfindungsgemässen Farbstoffmischungen auch im Ausziehverfahren sehr gute Fixierausbeuten.

Die erfindungsgemässen Farbstoffmischungen eignen sich auch zum Färben nach dem Thermosol-Verfahren und für den Textildruck.

Das genannte Textilmaterial kann in den verschiedensten Verarbeitungsformen vorliegen, wie z.B. als Faser, Faden oder Vlies, als Gewebe oder Gewirke.

Es ist vorteilhaft, die erfindungsgemässen Farbstoffmischungen vor ihrer Verwendung in ein Farbstoffpräparat überzuführen. Hierzu werden die Farbstoffe vermahlen, so dass seine Teilchengrösse im Mittel zwischen 0,01 und 10 Mikrometer beträgt. Das Vermahlen kann in Gegenwart von Dispergiermitteln erfolgen. Beispielsweise werden die getrockneten Farbstoffe mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, Britishgummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffmischungen verleihen den genannten Materialien, vor allem dem Polyestermaterial egale blaustichig rot bis violette Farbtöne von sehr guten Gebrauchs-Echtheiten, wie vor allem guter Lichtechtheit, guter Sublimierechtheit, Thermofixier-, Plissier-, Chlor- und Nassechtheit wie Wasser-, Schweiss- und Waschechtheit; die Ausfärbungen sind ferner gekennzeichnet durch eine gute pH-Stabilität und sehr gute Reibechtheit. Es werden ausserdem sehr farbstarke Färbungen erzielt, die kein "catalytic fading" zeigen.

Die erfindungsgemässen Farbstoffmischungen eignen sich auch zum Färben und Pigmentieren von hochmolekularen organischen Materialien, z.B. von Celluloseäthern und -estern, natürlichen Harzen oder Kunstharzen, wie Polymerisationsharzen oder Kondensationsharzen.

Die vorstehend genannte Verwendung der erfindungsgemässen Mischungen von Farbstoffen der Formel (1) stellt ebenso einen Gegenstand der vorliegenden Erfindung dar wie ein Verfahren zum Färben oder Bedrucken von halbsynthetischem oder synthetischem Fasermaterial, insbesondere Textilmaterial, das darin besteht, eine Mischung mehrerer Verbindungen der Formel (1) auf das genannte Material aufzubringen oder sie diesem einzuverleiben. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die folgenden Beispiele veranschaulichen die Erfindung weiter, ohne sie darauf zu beschränken. Teile und Prozente beziehen sich, sofern nicht anderes angegeben ist, auf das Gewicht. Die Temperaturen sind in Grad Celsius angegeben.

<u>Beispiel 1:</u>

Zu einem Gemisch, bestehend aus 11,5 g der Verbindung der Formel

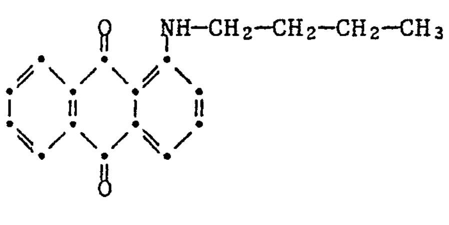

7 g Malodinitril und 250 ml Methylenchlorid lässt man bei einer Temperatur von 0-5° unter intensivem Rühren innerhalb von 30 Minuten 23 ml Titantetrachlorid zutropfen und anschliessend bei derselben Temperatur innerhalb von 30 Minuten 70 ml Pyridin. Man rührt das Gemisch anschliessend noch während 2 Stunden, wobei man die Temperatur auf 20° ansteigen lässt. Man entfernt nun die flüchtigen Anteile in einem Rotationsverdampfer im Vakuum, worauf man den Rückstand mit 200 ml 2n-HCl behandelt, abfiltriert und mit 2n-HCl nachwäscht. Man wäscht hierauf das Nutschgut mit Wasser bis zum neutralen Ablauf und anschliessend mit Methanol zur Entfernung brauner Nebenprodukte. Nach Zwischentrocknung wird das Produkt aus 10 Teilen Ethylcellosolve umkristallisiert. Man erhält den Farbstoff der Formel

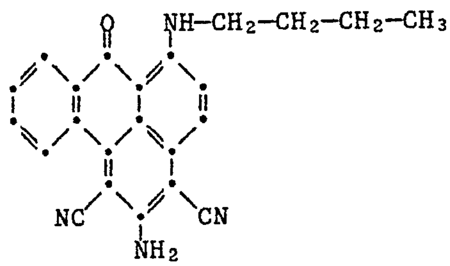

als dunkelviolettes Pulver.

Beispiel 2:

Zu einem Gemisch, bestehend aus 14,2 g der Verbindung der Formel

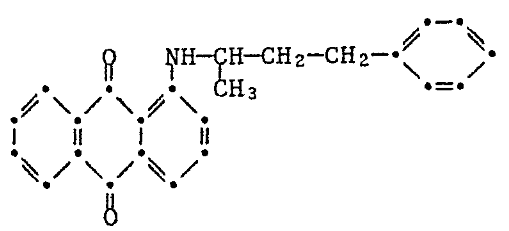

7 g Malodinitril und 250 ml Methylenchlorid lässt man bei einer Temperatur von 0-5° unter intensivem Rühren innerhalb von 30 Minuten 23 ml Titantetrachlorid zutropfen und anschliessend bei derselben Temperatur innerhalb von 30 Minuten 70 ml Pyridin. Man rührt das Gemisch anschliessend noch während 2 Stunden, wobei man die Temperatur auf 20° ansteigen lässt. Man entfernt nun die flüchtigen Anteile in einem Rotationsverdampfer im Vakuum, worauf man den Rückstand mit 200 ml 2n-HCl behandelt, abfiltriert und mit 2n-HCl nachwäscht. Man wäscht hierauf das Nutschgut mit Wasser bis zum neutralen Ablauf und anschliessend mit Methanol zur Entfernung brauner Nebenprodukte. Nach Zwischentrocknung wird das Produkt aus 10 Teilen Ethylcellosolve umkristallisiert. Man erhält den Farbstoff der Formel

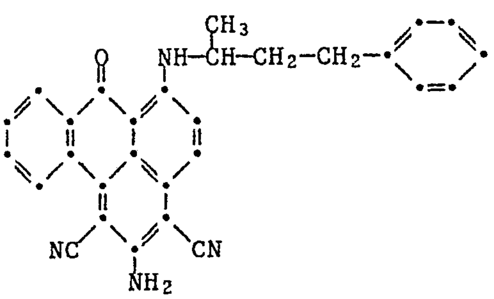

als dunkelviolettes Pulver.

Beispiel 3:

Man mischt je 1 Teil des trockenen, coupagefreien Farbstoffs gemäss Beispiel 1 und Beispiel 2 in einer Glasperlmühle zusammen mit 2 Teilen Dinaphthylmethandisulfonat (Na-Salz) und Wasser und mahlt das Gemisch so lange, bis eine Korngrösse von etwa 2 µ oder kleiner erreicht ist. Die entstehende Paste, bestehend aus dem Farbstoff, Dispergator und Wasser, wird anschliessend mit 6 Teilen Natriumligninsulfonat versetzt. Die erhaltene Paste wird sodann der Sprühtrocknung unterworfen, wobei ein pulverförmiges Färbepräparat erhalten wird.

Dieses Färbepräparat kann zum Färben von Polyestermaterialien nach dem HT-Verfahren verwendet werden, wobei das Färbebad eine gute Dispersionsstabilität aufweist. Man erhält eine blaustichig-rote Polyesterfärbung mit guter Lichtechtheit.

Das Ausziehvermögen des Gemisches ist deutlich besser als dasjenige der einzelnen Farbstoffe.

Beispiel 4-17:

Verwendet man, bei ansonst gleichem Vorgehen wie im Beispiel 3 die in der folgenden Tabelle aufgeführten Gemische von 1-Alkylamino-Anthrachinonen, so erhält man auf Polyester Färbungen in blaustichig-roten Nuancen, wobei das Ausziehvermögen der Farbstoffgemische erheblich besser ist als dasjenige der Einzelfarbstoffe.

Tabelle

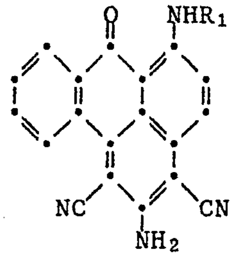

+

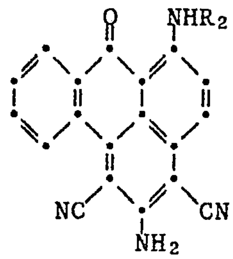

1:1-Gemische

| Beispiel | $R_1$ | $R_2$ | Nuance auf PES |
|---|---|---|---|
| 4 | $-CH_3$ | 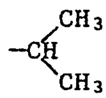 | blaustichig rot |
| 5 | $-CH_3$ | $-CH_2CH_2CH_2CH_3$ | blaustichig rot |
| 6 | 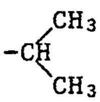 | $-CH_2CH_2CH_2CH_3$ | blaustichig rot |
| 7 | $-CH_3$ | 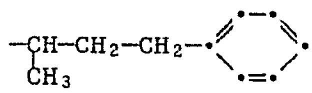 | blaustichig rot |
| 8 | 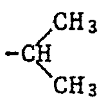 | 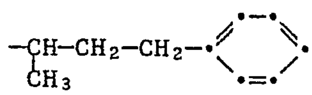 | blaustichig rot |
| 9 | $-CH_3$ | 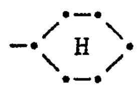 | blaustichig rot |
| 10 | 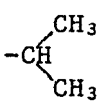 | 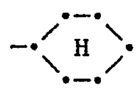 | blaustichig rot |
| 11 | $-CH_2CH_2CH_2CH_3$ | 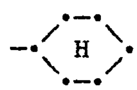 | blaustichig rot |
| 12 | 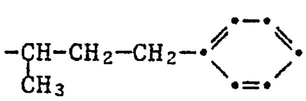 | 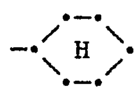 | blaustichig rot |
| 13 | $-CH_3$ | 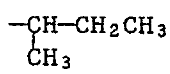 | blaustichig rot |
| 14 | 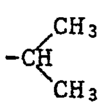 | 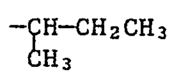 | blaustichig rot |
| 15 | $-CH_2CH_2CH_2CH_3$ | 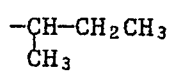 | blaustichig rot |
| 16 | 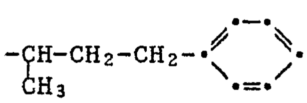 | 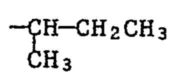 | blaustichig rot |
| 17 | 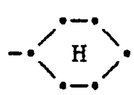 | 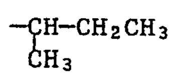 | blaustichig rot |

## Patentansprüche

1. Farbstoffmischungen, enthaltend mindestens zwei verschiedene Dicyanobenzanthronverbindungen der Formel

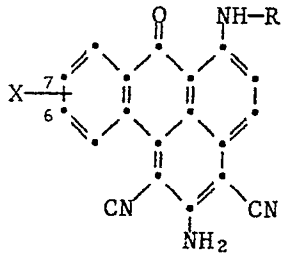

(1)

worin
R Wasserstoff, eine gegebenenfalls substituierte Alkyl- oder Arylgruppe und
X Wasserstoff oder Halogen, das sich in 6- oder 7-Stellung befindet, bedeutet.

2. Farbstoffmischungen gemäss Anspruch 1, worin R einen gegebenenfalls substituierten unverzweigten oder verzweigten Alkylrest, einen Cycloalkylrest oder einen gegebenenfalls substituierten Naphthyl- oder Phenylrest bedeutet.

3. Farbstoffmischungen gemäss Anspruch 2, worin R einen offenkettigen Alkyrest mit 1 bis 8 C-Atomen bedeutet, der unsubstituiert ist oder substituiert durch $C_1$-$C_4$-Alkoxy, durch OH substituiertes $C_1$-$C_4$-Alkoxy, Phenyl, Phenoxy oder Phenylaminocarbonyl, wobei die Phenylgruppe in den drei letztgenannten Resten z.B. durch $C_1$-$C_4$-Alkyl, $C_1$-$C_4$-Alkoxy oder Phenoxy substituiert sein kann, oder einen $C_5$-$C_8$-Cycloalkylrest, der unsubstituiert oder durch $C_1$-$C_4$-Alkyl substituiert ist, oder einen Naphthyl- oder Phenylrest, der unsubstituiert ist oder substituiert durch $C_1$-$C_4$-Alkyl, $C_1$-$C_4$-Alkoxy, Halogen, wie Fluor, Chlor oder Brom, Nitro, $C_1$-$C_4$-Alkylcarbonylamino oder $C_1$-$C_4$-Alkoxycarbonyl.

4. Farbstoffmischungen gemäss Anspruch 3, worin
R $C_1$-$C_6$-Alkyl, welches unsubstituiert ist oder durch Phenyl, Phenoxy oder Phenylaminocarbonyl substituiert ist, wobei die Phenylgruppe in den drei letztgenannten Resten durch $C_1$-$C_4$-Alkyl, $C_1$-$C_4$-Alkoxy oder Phenoxy substituiert sein kann, oder Phenyl, welches unsubstituiert ist oder durch $C_1$-$C_4$-Alkyl substituiert ist, bedeutet.

5. Farbstoffmischungen gemäss einem der Ansprüche 1-4, worin X Wasserstoff bedeutet.

6. Farbstoffmischungen gemäss Anspruch 1, enthaltend 20-80 Gew.% eines Farbstoffes der Formel

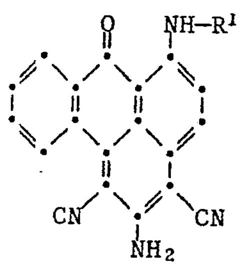

(2)

worin
$R^1$ $C_3$-$C_5$-Alkyl, Cyclohexyl oder Phenyl-$C_3$-$C_5$-Alkyl bedeutet, sowie 80-20 Gew.% eines Farbstoffes der Formel

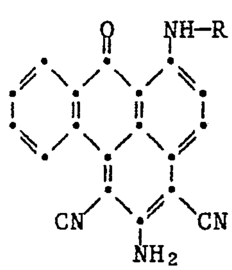

(3)

worin
R Wasserstoff, eine gegebenenfalls substituierte Alkyl- oder Arylgruppe bedeutet.

7. Farbstoffmischungen gemäss Anspruch 6, worin $R^1$ n-Butyl, sec-Butyl oder 1-Methyl-3-phenylpropyl

bedeutet.

8. Farbstoffmischungen gemäss Anspruch 6, worin R offenkettiges $C_1$-$C_6$-Alkyl, welches unsubstituiert oder durch Phenyl substituiert ist, oder Cyclohexyl bedeutet.

9. Farbstoffmischungen gemäss Anspruch 1, enthaltend 40-60 Gew.% eines Farbstoffes der Formel (2), worin $R^1$ n-Butyl, sec-Butyl oder 1-Methyl-3-phenylpropyl bedeutet, sowie 60-40 Gew.% eines Farbstoffes der Formel (3), worin R offenkettiges $C_1$-$C_6$-Alkyl, welches unsubstituiert oder durch Phenyl substituiert ist, oder Cyclohexyl bedeutet.

10. Verfahren zur Herstellung der Farbstoffmischungen gemäss einem der Ansprüche 1-9, dadurch gekennzeichnet, dass man die Farbstoffe einzeln herstellt und dann miteinander vermischt.

11. Verwendung der Farbstoffmischungen gemäss einem der Ansprüche 1-9 zum Färben oder Bedrucken von halbsynthetischen oder synthetischen Fasermaterialien, insbesondere Textilmaterialien aus linearen aromatischen Polyestern.

12. Das gemäss Anspruch 11 gefärbte oder bedruckte Material.

Europäisches Patentamt

# EUROPÄISCHER RECHERCHENBERICHT

Nummer der Anmeldung

EP 89 81 0397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 238 443 (CIBA-GEIGY) * Ansprüche 1-19; Seite 3, Zeilen 51-52 * ----- | 1-5,10-12 | C 09 B 67/22<br>C 09 B 3/04 |
| | | | **RECHERCHIERTE SACHGEBIETE (Int. Cl.4)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 12-09-1989 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)